# EUROPEAN PATENT APPLICATION

(11) **EP 4 057 629 A2**
(43) Date of publication of application: **14.09.2022**
(21) Application number: 22182988.0
(22) Date of filing: 05.07.2022
(51) Int. Cl.: H04N 21/218, G06F 11/07, H04N 7/18, H04N 21/2187, H04N 21/24, H04N 21/4425, H04N 21/6375

(54) **VIDEO PLAYING METHOD AND APPARATUS, STORAGE MEDIUM, AND COMPUTER PROGRAM PRODUCT**

(30) Priority: 06.07.2021 CN 202110762340
(71) Applicant: Apollo Intelligent Connectivity (Beijing) Technology Co., Ltd., Beijing 100176 (CN)
(72) Inventor: LIU, Shaogeng, BEIJING, 100176 (CN); CHEN, Yu, BEIJING, 100176 (CN); LI, Yun, BEIJING, 100176 (CN); XU, Zhe, BEIJING, 100176 (CN); MA, Wei, BEIJING, 100176 (CN)
(74) Representative: Thoma, Michael

(57) **Abstract**

The present disclosure provides a video playing method and apparatus, an electronic device and a storage medium, and relates to the technical field of intelligent transportation, in particular to video monitoring and smart highway, for example, a large screen playing-by-turns function capable of being used for the smart highway. An implementation solution is: at a screen playing system: obtaining a video playing address list from a video management server, wherein the video playing address list includes playing links of real-time video streams of a plurality of monitoring cameras; obtaining the real-time video streams of the plurality of monitoring cameras from the video management server according to the video playing address list so as to be played on a screen; obtaining a historical video stream of at least one of the monitoring cameras from a video storage server so as to be played on the screen in response to detecting fault information which indicates that the real-time video stream of the at least one of the monitoring cameras cannot be played; and recording the fault information, wherein the fault information includes the playing link of the real-time video stream of the at least one of the monitoring cameras.

## Description

### TECHNICAL FIELD

The present disclosure relates to the technical field of intelligent transportation, in particular to the technical field of video monitoring and smart highway, specifically to a video playing method and apparatus, a computer readable storage medium and a computer program product.

### BACKGROUND ART

In a video monitoring system, for example, a large-screen playing-by-turns function for smart highway usually plays videos of a plurality of monitoring cameras in the system by turns through a screen playing system. When the monitoring cameras have a failure, their videos cannot be acquired in real time and consequently cannot be played in real time, a black screen will occur on a screen of the screen playing system, and user experience is reduced.

A method described in this part is not necessarily a method envisaged or adopted before. Unless otherwise indicated, it should not be presumed that any one of methods described in this part is regarded as the prior art only depending on being included in this part. Likewise, unless otherwise indicated, a problem mentioned in this part should not be constructed as being recognized in any prior art.

### SUMMARY OF THE INVENTION

The present disclosure provides a video playing method and apparatus, an electronic device, a computer readable storage medium and a computer program product.

According to an aspect of the present disclosure, a computer-implemented video playing method is provided and is used for a video monitoring system. The video monitoring system includes a screen playing system, a video management server, a plurality of monitoring cameras and a video storage server. The method includes: at the screen playing system: obtaining a video playing address list from the video management server, wherein the video playing address list includes playing links of real-time video streams of the plurality of monitoring cameras; obtaining the real-time video streams of the plurality of monitoring cameras from the video management server according to the video playing address list so as to be played on a screen; obtaining a historical video stream of at least one of the monitoring cameras from the video storage server so as to be played on the screen in response to detecting fault information which indicates that the real-time video stream of the at least one of the monitoring cameras cannot be played; and recording the fault information, wherein the fault information includes the playing link of the real-time video stream of the at least one of the monitoring cameras.

According to another aspect of the present disclosure, a video playing apparatus is provided and is used for a video monitoring system. The video monitoring system includes a screen playing system, a video management server, a plurality of monitoring cameras and a video storage server. The video playing apparatus resides in the screen playing system and includes: a first obtaining module, configured to obtain a video playing address list from the video management server, wherein the video playing address list includes playing links of real-time video streams of the plurality of monitoring cameras; a second obtaining module, configured to obtain the real-time video streams of the plurality of monitoring cameras from the video management server according to the video playing address list so as to be played on a screen; a third obtaining module, configured to obtain a historical video stream of at least one of the monitoring cameras from the video storage server so as to be played on the screen in response to detecting fault information which indicates that the real-time video stream of the at least one of the monitoring cameras cannot be played; and a recording module, configured to record the fault information, wherein the fault information includes the playing link of the real-time video stream of the at least one of the monitoring cameras.

According to another aspect of the present disclosure, a non-transitory computer readable storage medium storing a computer instruction is provided. The computer instruction is configured to enable a computer to implement the video playing method described above.

According to another aspect of the present disclosure, a computer program product is provided and includes a computer program. The computer program, when executed by a processor, implements the video playing method described above.

According to one or a plurality of embodiments of the present disclosure, an on-line state of the monitoring cameras can be monitored and recorded in real time, occurrence of a black screen is reduced, and user experience is improved.

It should be understood that described contents in this part are neither intended to indicate key or important features of the embodiments of the present disclosure, nor used to limit the scope of the present disclosure. Other features of the present disclosure will become easier to understand through the following specification.

### BRIEF DESCRIPTION OF THE DRAWINGS

Accompanying drawings, constituting a part of the specification, exemplarily illustrate embodiments and, together with text description of the specification, serve to explain exemplary implementations of the embodiments. The illustrated embodiments only aim to serve as examples rather than limit the scope of the claims. In all the drawings, same reference numbers represent similar but not necessarily the same elements.
Fig. 1 illustrates a schematic diagram of an exemplary video monitoring system where various methods described herein can be implemented according to an embodiment of the present disclosure.
Fig. 2 illustrates a flowchart of a video playing method according to an embodiment of the present disclosure.
Fig. 3 illustrates a flowchart of a video playing method according to an embodiment of the present disclosure.
Fig. 4 illustrates a flowchart of a video playing method according to another embodiment of the present disclosure.
Fig. 5 illustrates a flowchart of a method of obtaining a video playing address list from a video management server according to an embodiment of the present disclosure.
Fig. 6 illustrates a flowchart of a video playing method according to another embodiment of the present disclosure.
Fig. 7 illustrates a structural block diagram of a video playing apparatus according to an embodiment of the present disclosure.
Fig. 8 illustrates a structural block diagram of an exemplary electronic device capable of being used for implementing an embodiment of the present disclosure.

### DETAILED DESCRIPTION OF THE EMBODIMENTS

The exemplary embodiments of the present disclosure are described below with reference to the drawings, which include various details of the embodiments of the present disclosure for the sake of better understanding and should be constructed as being only exemplary. Therefore, those ordinarily skilled in the art should realize that various changes and modifications can be made to the embodiments described herein without departing from the scope of the present disclosure. Similarly, for the sake of being clear and concise, description for known functions and structures is omitted in the following description.

In the present disclosure, unless otherwise stated, terms such as "first" and "second" used for describing various elements are not intended to limit a position relation, a sequence relation or a significance relation of these elements and are only used for distinguishing one component from another component. In some examples, a first element and a second element may refer to the same instance of the elements, which, under certain circumstances, may also refer to different instances on the basis of the context.

Terms used in the description of the various examples in the present disclosure only aim to describe specific examples rather than intend to make a limitation. Unless otherwise indicated clearly in the context, the quantity of the elements may be one or more if the quantity of the elements is not particularly limited. Besides, a term "and/or" used in the present disclosure covers any one or all possible combinations of listed items.

The embodiments of the present disclosure will be described in detail below with reference to the drawings.

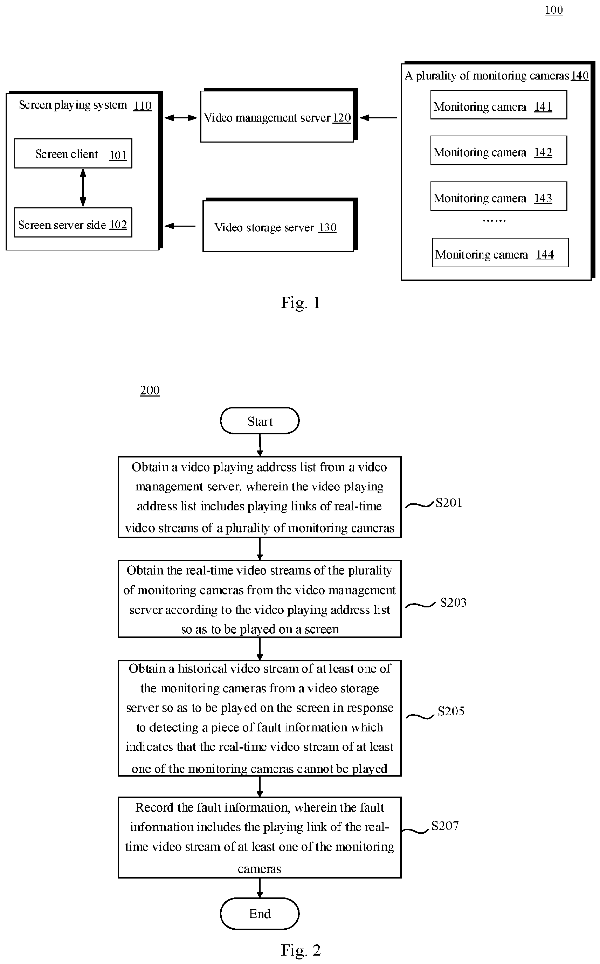

Fig. 1 illustrates a schematic diagram of an exemplary video monitoring system 100 where various methods described herein can be implemented according to an embodiment of the present disclosure. Referring to Fig. 1, the video monitoring system 100 includes a screen playing system 110, a video management server 120, a video storage server 130 and a plurality of monitoring cameras 140. The screen playing system 110 includes a screen client 101 and a screen server 102. The plurality of monitoring cameras 140 include cameras 141, 142, 143 and 144.

According to some embodiments, an interface of the screen client 101 is nine squares, a video from a playing link can be played in each square of the nine squares, and videos from nine playing links can be played at the same time.

According to some embodiments, the plurality of monitoring cameras 140 may have, for example, 300 monitoring cameras. According to relevant setting, the video monitoring system 100 dynamically selects a playing link and plays videos from nine monitoring cameras in the screen client 101 every time.

According to some embodiments, the video management server 120 and the video storage server 130 may include one or more general-purpose computers, special-purpose server computers (for example, a personal computer (PC) server, a UNIX server, or a mid-range server), a blade server, a mainframe computer, a server cluster or any other appropriate arrangement and/or combination.

According to some embodiments, the video management server 120 obtains videos from the plurality of monitoring cameras 140 in real time and provides the screen playing system with playing links through an http interface in response to receiving an http request from the screen playing system 110.

According to some embodiments, the video storage server 130 stores historical video streams, data and other information.

The system 100 in Fig. 1 may be configured and operated in various modes so that various methods and apparatuses described according to the present disclosure can be applied.

Fig. 2 illustrates a flowchart of a video playing method 200 according to an embodiment of the present disclosure. As shown in Fig. 2, at a screen playing system, the video playing method 200 may include: step S201, a video playing address list is obtained from a video management server, wherein the video playing address list includes playing links of real-time video streams of a plurality of monitoring cameras; step S203, the real-time video streams of the plurality of monitoring cameras are obtained from the video management server according to the video playing address list so as to be played on a screen; step S205, a historical video stream of at least one of the monitoring cameras is obtained from a video storage server so as to be played on the screen in response to detecting fault information which indicates that the real-time video stream of the at least one of the monitoring cameras cannot be played; and step S207, the fault information is recorded, wherein the fault information includes the playing link of the real-time video stream of the at least one of the monitoring cameras.

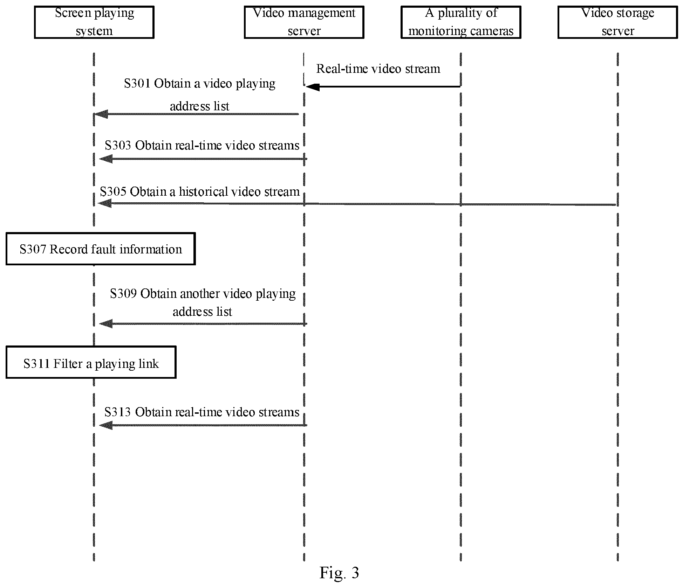

Fig. 3 illustrates a flowchart of a video playing method according to an embodiment of the present disclosure. Specifically, Fig. 3 illustrates the following steps.

Step S301, the video playing address list is obtained: the screen playing system obtains the video playing address list from the video management server, wherein the video playing address list includes the playing links of the real-time video streams of the plurality of monitoring cameras.

According to some embodiments, information such as the playing links, device identification numbers of the monitoring cameras and device channels are recorded in the video playing address list.

Step S303, the real-time video streams are obtained: the screen playing system obtains the real-time video streams from the video management server according to the video playing address list so as to be played on the screen.

According to some embodiments, after the video management server obtains the real-time video streams from the plurality of monitoring cameras, the real-time video streams are encoded in a format of a transport stream (ts) file so as to facilitate transmission of the real-time video streams.

Step S305, the historical video stream is obtained: the historical video stream of the at least one of the monitoring cameras is obtained from the video storage server so as to be played on the screen in response to that the screen playing system detects the fault information which indicates that the real-time video stream of the at least one of the monitoring cameras cannot be played.

According to some embodiments, a source of the historical video stream is a historically played video stream of each of the plurality of monitoring cameras. When the real-time video stream of one of the monitoring cameras cannot be played, the historical video stream of the monitoring camera is obtained from the video storage server.

According to some other embodiments, the source of the historical video stream is historically played video streams of several typical monitoring cameras among the plurality of monitoring cameras. When the real-time video stream of the one of the monitoring cameras cannot be played, according to a preset rule, one of several typical historically played video streams is obtained from the video storage server.

By obtaining the historical video streams in real time, a long-time black screen of a part of regions of the screen playing system due to failure in playing the real-time video streams is avoided, and watching experience of a user is improved.

Step S307, the fault information is recorded: the fault information is recorded in the screen playing system, wherein the fault information includes the playing link of the real-time video stream of the at least one of the monitoring cameras. Therefore, an on-line state of the monitoring cameras may be monitored and recorded in real time, and guidance is provided for maintenance of the video monitoring system.

Step S309, another video playing address list is obtained: the screen playing system obtains another video playing address list from the video management server.

Step S311, the playing link is filtered: in response to that the screen playing system confirms that the another video playing address list includes the playing link of the real-time video stream of the at least one of the monitoring cameras in step S307, the playing link of the real-time video stream of the at least one of the monitoring cameras is filtered out from the another video playing address list so that the non-filtered playing links of the real-time video streams of the monitoring cameras can be obtained. The non-filtered playing links of the real-time video streams of the monitoring cameras are playing links of the real-time video streams of the monitoring cameras which can be played normally.

Step S313, the real-time video streams are obtained: the screen playing system obtains the non-filtered real-time video streams of the monitoring cameras from the video management server according to the another filtered video playing address list so as to be played on the screen. Therefore, the real-time video streams may be obtained when playing is performed again, and occurrence of a black screen phenomenon is avoided.

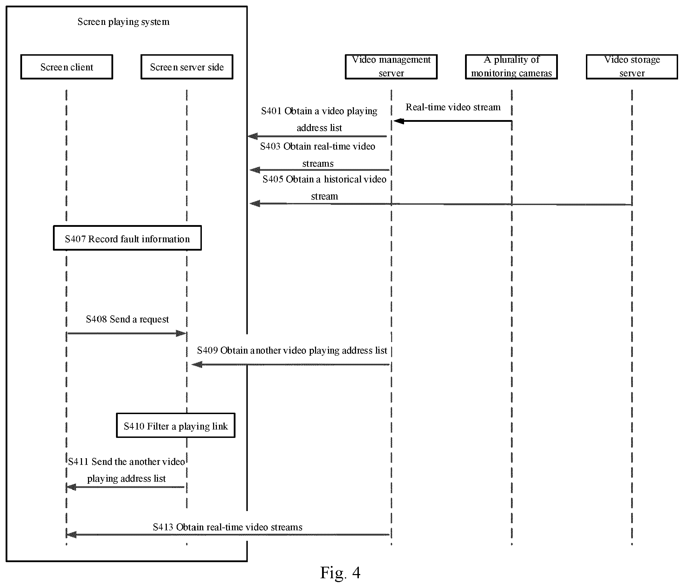

Fig. 4 illustrates a flowchart of a video playing method according to another embodiment of the present disclosure. The screen playing system includes a screen client and a screen server. Specifically, Fig. 4 illustrates the following steps.

Step S401, the video playing address list is obtained: the screen playing system obtains the video playing address list from the video management server, wherein the video playing address list includes the playing links of the real-time video streams of the plurality of monitoring cameras.

Step 403, the real-time video streams are obtained: the screen playing system obtains the real-time video streams of the plurality of monitoring cameras from the video management server according to the video playing address list so as to be played on the screen.

Step S405, the historical video stream is obtained: in response to that the screen playing system detects the fault information which indicates that the real-time video stream of the at least one of the monitoring cameras cannot be played, the historical video stream of the at least one of the monitoring cameras is obtained from the video storage server so as to be played on the screen.

Step S407, the fault information is recorded: the fault information is recorded in the screen playing system, wherein the fault information includes the playing link of the real-time video stream of the at least one of the monitoring cameras.

Step S408, a request is sent: the screen client is enabled to send the request specific to the another video playing address list to the screen server.

Step S409, the another video playing address list is obtained: the screen server is enabled to obtain the another video playing address list from the video management server in response to the request.

Step S410, the playing link is filtered: the screen server is enabled to filter out the playing link of the real-time video stream of the at least one of the monitoring cameras in step S405 from the another obtained video playing address list.

Step S411, the another video playing address list is sent: the another filtered video playing address list is sent to the screen client.

Step S413, the real-time video streams are obtained: the screen client is enabled to directly obtain the non-filtered real-time video streams of the monitoring cameras from the video management server according to the another filtered video playing address list.

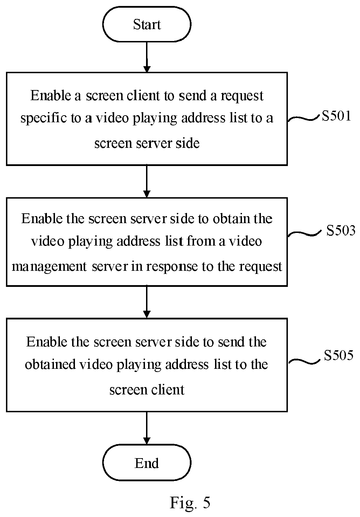

Fig. 5 illustrates a flowchart of a method of obtaining a video playing address list from a video management server according to an embodiment of the present disclosure. The screen playing system includes the screen client and the screen server. Specifically, the method includes: step S501, the screen client is enabled to send the request specific to the video playing address list to the screen server; step S503, the screen server is enabled to obtain the video playing address list from the video management server in response to the request; and step S505, the screen server is enabled to send the obtained video playing address list to the screen client.

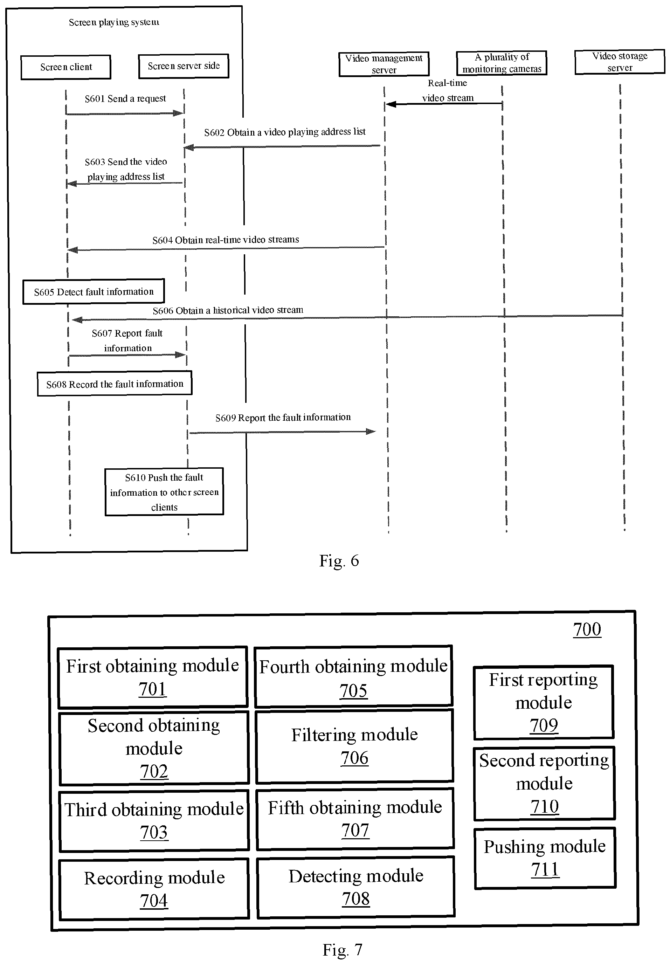

Fig. 6 illustrates a flowchart of a video playing method according to another embodiment of the present disclosure. The screen playing system includes the screen client and the screen server. Specifically, Fig. 6 illustrates the following steps.

Step S601, the request is sent: the screen client is enabled to send the request specific to the video playing address list to the screen server

Step S602, the video playing address list is obtained: the screen server is enabled to obtain the video playing address list from the video management server in response to the request.

Step S603, the video playing address list is send: the screen server is enabled to send the obtained video playing address list to the screen client.

Step S604, the real-time video streams are obtained: the screen client is enabled to directly obtain the real-time video streams of the plurality of monitoring cameras from the video management server.

Step S605, the fault information is detected: the screen client is enabled to detect the fault information.

Step S606, the historical video stream is obtained: the screen client is enabled to directly obtain the historical video stream of the at least one of the monitoring cameras from the video storage server in response to detecting the fault information.

Step S607, the fault information is reported: the screen client is enabled to report the detected fault information to the screen server.

Step S608, the fault information is recorded: the fault information is recorded in the screen playing system, wherein the fault information includes the playing link of the real-time video stream of at least one of the monitoring cameras.

Step S609, the fault information is reported: the screen server is enabled to report the fault information to the video management server in real time in response to receiving the fault information from the screen client.

Step S610, the fault information is pushed to other screen clients: the screen server is enabled to push the fault information to the other screen clients of the video monitoring system in real time in response to receiving the fault information from the screen client.

Fig. 7 illustrates a structural block diagram of a video playing apparatus 700 according to an embodiment of the present disclosure. As shown in Fig. 7, the video playing apparatus 700 includes: a first obtaining module 701, configured to obtain a video playing address list from a video management server, wherein the video playing address list includes playing links of real-time video streams of a plurality of monitoring cameras; a second obtaining module 702, configured to obtain the real-time video streams of the plurality of monitoring cameras from the video management server according to the video playing address list so as to be played on a screen; a third obtaining module 703, configured to obtain a historical video stream of at least one of the monitoring cameras from a video storage server so as to be played on the screen in response to detecting fault information which indicates that the real-time video stream of the at least one of the monitoring cameras cannot be played; and a recording module 704, configured to record the fault information, wherein the fault information includes the playing link of the real-time video stream of the at least one of the monitoring cameras.

According to some embodiments, the video playing apparatus 700 may further include: a fourth obtaining module 705, configured to obtain another video playing address list from the video management server; a filtering module 706, configured to filter out the playing link of the real-time video stream of the at least one of the monitoring cameras from the another video playing address list in response to confirming that the another video playing address list includes the playing link of the real-time video stream of the at least one of the monitoring cameras, so that the non-filtered playing links of the real-time video streams of the monitoring cameras can be obtained; and a fifth obtaining module 707, configured to obtain the non-filtered real-time video streams of the monitoring cameras from the video management server according to the another filtered video playing address list so as to be played on the screen.

According to some embodiments, the fourth obtaining module 705 is further configured to: enable a screen client to send a request specific to the another video playing address list to a screen server; and enable the screen server to obtain the another video playing address list from the video management server in response to the request.

According to some embodiments, the filtering module 706 is further configured to: enable the screen server to filter out the playing link of the real-time video stream of the at least one of the monitoring cameras from the another obtained video playing address list; and send the another filtered video playing address list to the screen client.

According to some embodiments, the first obtaining module 707 is further configured to: enable the screen client to directly obtain the non-filtered real-time video streams of the monitoring cameras from the video management server according to the another filtered video playing address list.

According to some embodiments, the first obtaining module 701 is further configured to: enable the screen client to send the request specific to the video playing address list to the screen server; enable the screen server to obtain the video playing address list from the video management server in response to the request; and enable the screen server to send the obtained video playing address list to the screen client.

According to some embodiments, the second obtaining module 702 is further configured to: enable the screen client to directly obtain the real-time video streams of the plurality of monitoring cameras from the video management server.

According to some embodiments, the video playing apparatus 700 may further include: a detecting module 708, configured to enable the screen client to detect the fault information; and a first reporting module 709, configured to enable the screen client to report the detected fault information to the screen server.

According to some embodiments, the video playing apparatus 700 may further include: a second reporting module 710, configured to enable the screen server to report the fault information to the video management server in real time in response to receiving the fault information from the screen client.

According to some embodiments, the video playing apparatus 700 may further include: a pushing module 711, configured to enable the screen server to push the fault information to other screen clients of the video monitoring system in real time in response to receiving the fault information from the screen client.

According to some embodiments, the third obtaining module 703 is further configured to: enable the screen client to directly obtain the historical video stream of the at least one of the monitoring cameras from the video storage server in response to detecting the fault information.

It should be understood that all modules of the apparatus 700 shown in Fig. 7 may correspond to all steps in the method described referring to Fig. 2 to Fig. 6. Therefore, operations, features and advantages described above specific to the method embodiment are also suitable for the apparatus 700 and the modules included therein. For the sake of being concise, certain operations, features and advantages are not described in detail here.

Though specific functions are discussed above with reference to specific modules, it should be noted that functions of each module discussed herein may be divided into a plurality of modules, and/or at least some functions of the plurality of modules may be combined into a single module. Executing an action by a specific module discussed herein includes that the specific module itself executes the action, or alternatively, the specific module calls or visits in another mode another component or module executing the action (or the action is executed in combination with the specific module). Therefore, the specific module executing the action may include the specific module itself which executes the action and/or the another module which is called or visited in another mode by the specific module and executes the action.

It should be further understood that various technologies can be described in a general context of software and hardware components or program modules herein. All the above modules described in Fig. 7 may be implemented in hardware or hardware combined with software and/or firmware. For example, these modules may be realized as a computer program code/instruction. The computer program code/instruction is configured to be executed in one or more processors and be stored in a computer readable storage medium. Alternatively, these modules may be realized as a hardware logic/circuit.

According to an aspect of the present disclosure, an electronic device is provided and includes a memory, a processor and a computer program stored in the memory. The processor is configured to execute the computer program so as to implement steps of any method embodiment described above.

According to an aspect of the present disclosure, a non-transitory computer readable storage medium is provided and stores a computer program. The computer program, when executed by a processor, implements steps of any method embodiment described above.

According to an aspect of the present disclosure, a computer program product is provided and includes a computer program. The computer program, when executed by a processor, implements steps of any method embodiment described above.

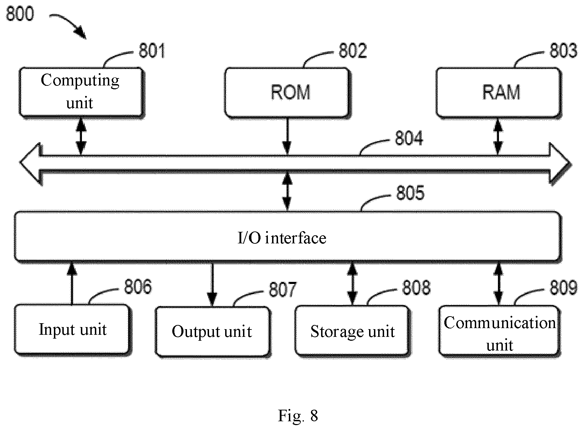

Fig. 8 illustrates a structural block diagram of an exemplary electronic device 800 capable of being used for implementing an embodiment of the present disclosure, which is an example of a hardware device capable of being applied to various aspects of the present disclosure.

As shown in Fig. 8, the device 800 includes a computing unit 801 which may execute various appropriate actions and processing according to a computer program stored in a read-only memory (ROM) 802 or a computer program loaded to a random access memory (RAM) 803 from a storage unit 808. In the RAM 803, various programs and data needed for operations of the device 800 may be further stored. The computing unit 801, the ROM 802 and the RAM 803 are mutually connected through a bus 804. An input/output (I/O) interface 805 is also connected to the bus 804.

A plurality of components in the device 800 are connected to the I/O interface 805, including: an input unit 806, an output unit 807, the storage unit 808 and a communication unit 809. The input unit 806 may be any type of device capable of inputting information to the device 800. The input unit 806 may receive input number or character information and generate key signal input related to a user setting and/or function control of the electronic device and may include but is not limited to a mouse, a keyboard, a touch screen, a trackpad, a trackball, a joystick, a microphone and/or a remote-control unit. The output unit 807 may be any type of device capable of displaying information and may include but is not limited to a display, a speaker, a video/audio output terminal, a vibrator and/or a printer. The storage unit 808 may include but is not limited to a magnetic disk and an compact disc. The communication unit 809 may allow the device 800 to exchange information/data with other devices through a computer network, such as the Internet, and/or various telecommunication networks and may include but is not limited to a modem, a network card, an infrared communication device, a wireless communication transceiver and/or a chipset, for example, a Bluetooth TM device, a 802.11 device, a WiFi device, a WiMax device, a cellular communication device and/or similar items.

The computing unit 801 may be various general-purpose and/or special-purpose processing components with processing and computing capacity. Some examples of the computing unit 801 include but are not limited to a central processing unit (CPU), a graphics processing unit (GPU), various special-purpose artificial intelligence (AI) computing chips, various computing units for running a machine learning model algorithm, a digital signal processor (DSP), and any appropriate processor, controller, microcontroller and the like. The computing unit 801 executes each method and processing described above, for example, the video playing method. For example, in some embodiments, the video playing method may be realized as a computer software program, which is tangibly contained in a machine readable medium, for example, the storage unit 808. In some embodiments, a part of or all of the computer program may be loaded and/or installed onto the device 800 via the ROM 802 and/or the communication unit 809. When the computer program is loaded to the RAM 803 and executed by the computing unit 801, one or more steps of the video playing method described above can be executed. Alternatively, in other embodiments, the computing unit 801 may be configured to execute the video playing method in any other appropriate mode (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a load programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read necessa memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally away from each other and usually interact through a communication network. A relation between the client and the server is generated by running a computer program with a mutual client-server relation on a corresponding computer. The server may be a cloud server, or a server of a distributed system, or a server combined with a blockchain.

According to an aspect of the present disclosure, a smart highway large screen is provided and includes the electronic device described above. The smart highway large screen may be a liquid crystal splice screen, an LED screen or a DLP back projector, etc. The smart highway large screen in various forms may display real-time video streams or historical video streams from a plurality of monitoring cameras on a screen through an intelligent split screen function.

It should be understood that steps can be reranked, added or deleted by using various forms of flows shown above. For example, all the steps recorded in the present disclosure can be executed in parallel, or in sequence or in different orders, which is not limited herein as long as a desired result of the technical solutions disclosed by the present disclosure can be realized.

Though the embodiments or the examples of the present disclosure are already described with reference to the drawings, it should be understood that the above method, system or device is only an exemplary embodiment or example, and the scope of present disclosure is not limited by these embodiments or examples but limited only by the scope of the authorized claims and their equivalents. Various elements in the embodiments or the examples may be omitted or replaced by their equivalent elements. Besides, all the steps may be executed in sequence different from a sequence described in the present disclosure. Furthermore, various elements in the embodiments or the examples may be combined in various modes. What counts is that with technology evolution, many elements described here can be replaced by equivalent elements appearing after the present disclosure.

## Claims

1. A video playing method, used for a video monitoring system, wherein the video monitoring system comprises a screen playing system, a video management server, a plurality of monitoring cameras and a video storage server, and the method comprises:
at the screen playing system:
obtaining(S201) a video playing address list from the video management server, wherein the video playing address list comprises playing links of real-time video streams of the plurality of monitoring cameras;
obtaining(S203) the real-time video streams of the plurality of monitoring cameras from the video management server according to the video playing address list so as to be played on the screen;
obtaining(S205) a historical video stream of at least one of the monitoring cameras from the video storage server so as to be played on the screen in response to detecting fault information which indicates that the real-time video stream of the at least one of the monitoring cameras cannot be played; and
recording(S207) the fault information, wherein the fault information comprises the playing link of the real-time video stream of the at least one of the monitoring cameras.

2. The method according to claim 1, further comprising:
obtaining another video playing address list from the video management server;
filtering out the playing link of the real-time video stream of the at least one of the monitoring cameras from the another video playing address list in response to confirming that the another video playing address list comprises the playing link of the real-time video stream of the at least one of the monitoring cameras, thereby obtaining non-filtered playing links of the real-time video streams of the monitoring cameras; and
obtaining non-filtered real-time video streams of the monitoring cameras from the video management server according to the another filtered video playing address list so as to be played on the screen.

3. The method according to claim 2, wherein the screen playing system comprises a screen client and a screen server, and wherein obtaining the another video playing address list from the video management server comprises:
enabling the screen client to send a request specific to the another video playing address list to the screen server; and
enabling the screen server to obtain the another video playing address list from the video management server in response to the request.

4. The method according to claim 3, wherein filtering out the playing link of the real-time video stream of the at least one of the monitoring cameras from the another video playing address list comprises:
enabling the screen server to filter out the playing link of the real-time video stream of the at least one of the monitoring cameras from the another obtained video playing address list; and
sending the another filtered video playing address list to the screen client.

5. The method according to claim 4, wherein obtaining the non-filtered real-time video streams of the monitoring cameras from the video management server comprises:
enabling the screen client to directly obtain the non-filtered real-time video streams of the monitoring cameras from the video management server according to the another filtered video playing address list.

6. The method according to anyone of claim 1-5 , wherein the screen playing system comprises a screen client and a screen server, and wherein obtaining the video playing address list from the video management server comprises:
enabling the screen client to send a request specific to the video playing address list to the screen server;
enabling the screen server to obtain the video playing address list from the video management server in response to the request; and
enabling the screen server to send the obtained video playing address list to the screen client.

7. The method according to claim 6, wherein obtaining the real-time video streams of the plurality of monitoring cameras from the video management server comprises:
enabling the screen client to directly obtain the real-time video streams of the plurality of monitoring cameras from the video management server.

8. The method according to claim 6 or 7 , further comprising:
enabling the screen client to detect the fault information; and
enabling the screen client to report the detected fault information to the screen server.

9. The method according to claim 8, further comprising:
enabling the screen server to report the fault information to the video management server in real time in response to receiving the fault information from the screen client.

10. The method according to claim 8 or 9 , further comprising:
enabling the screen server to push the fault information to other screen clients of the video monitoring system in real time in response to receiving the fault information from the screen client.

11. The method according to anyone of claim 8-10 , wherein obtaining the historical video stream of the at least one of the monitoring cameras from the video storage server comprises:
enabling the screen client to directly obtain the historical video stream of the at least one of the monitoring cameras from the video storage server in response to detecting the fault information.

12. A video playing apparatus, used for a video monitoring system, wherein the video monitoring system comprises a screen playing system, a video management server, a plurality of monitoring cameras and a video storage server, and the video playing apparatus resides in the screen playing system and comprises:
a first obtaining module(701), configured to obtain a video playing address list from the video management server, wherein the video playing address list comprises playing links of real-time video streams of the plurality of monitoring cameras;
a second obtaining module(702), configured to obtain the real-time video streams of the plurality of monitoring cameras from the video management server according to the video playing address list so as to be played on a screen;
a third obtaining module(703), configured to obtain a historical video stream of at least one of the monitoring cameras from the video storage server so as to be played on the screen in response to detecting fault information which indicates that the real-time video stream of the at least one of the monitoring cameras cannot be played; and
a recording module(704), configured to record the fault information, wherein the fault information comprises the playing link of the real-time video stream of the at least one of the monitoring cameras.

13. The apparatus according to claim 12, further comprising:
a fourth obtaining module, configured to obtain another video playing address list from the video management server;
a filtering module, configured to filter out the playing link of the real-time video stream of the at least one of the monitoring cameras from the another video playing address list in response to confirming that the another video playing address list comprises the playing link of the real-time video stream of the at least one of the monitoring cameras, thereby obtaining non-filtered playing links of the real-time video streams of the monitoring cameras; and
a fifth obtaining module, configured to obtain the non-filtered real-time video streams of the monitoring cameras from the video management server according to the another filtered video playing address list so as to be played on the screen.

14. A non-transitory computer readable storage medium storing a computer instruction, wherein the computer instruction is used for enabling a computer to execute the method according to any one of claims 1-11.

15. A computer program product, comprising a computer program, wherein the computer program, when executed by a processor, implements the method according to any one of claims 1-11.
